# EUROPÄISCHE PATENTSCHRIFT

(11) **EP 3 555 395 B1**
(45) Veröffentlichungstag und Bekanntmachung des Hinweises auf die Patenterteilung: **16.02.2022**
(21) Anmeldenummer: 16816279.0
(22) Anmeldetag: 19.12.2016
(51) Int. Cl.: E05D 5/02, F16B 7/04

(54) **BEFESTIGUNGSSYSTEM**
FASTENING SYSTEM
SYSTÈME DE MONTAGE

(43) Veröffentlichungstag der Anmeldung: 23.10.2019
(73) Patentinhaber: Dr. Hahn GmbH & Co. KG, 41189 Mönchengladbach (DE)
(72) Erfinder: NEETEN, Dominik, 41238 Mönchengladbach (DE); LENZE, Markus, 41334 Nettetal (DE)
(74) Vertreter: Kluin, Jörg-Eden
(86) Internationale Anmeldenummer: PCT/EP2016/081779
(87) Internationale Veröffentlichungsnummer: WO 2018/113905

(56) Entgegenhaltungen:
- DE-A1- 1 817 951
- DE-A1- 2 317 880
- DE-A1- 2 354 092
- DE-B3-102015 114 895
- DE-U1- 20 204 175
- FR-A1- 2 530 937
- GB-A- 1 460 364

## Beschreibung

Die Erfindung betrifft ein Befestigungssystem mit einem Profil.

Derartige Befestigungsprofile sind bereits bekannt. Sie dienen beispielsweise dazu, ein Beschlagteil, bei dem es sich um den Teil eines Bandes zur Verbindung beispielsweise eines Türflügels mit einem Rahmen handeln kann, mit einem Profil zu verbinden.

Nachteilig bei bekannten Befestigungssystemen ist, dass sie oft nicht wünschenswert einfach montierbar sind und/oder keine wünschenswert belastbare Befestigung des Befestigungsstücks an dem Profil bewirken und/oder aufwändig herzustellen sind.

Die DE1817951 A1, die DE2317880 A1 und die DE102015114895 B3 offenbaren Befestigungssysteme mit einem Profil und Klemmstücken.

Die Erfindung hat es sich zur Aufgabe gemacht, ein Befestigungssystem zu schaffen, das zumindest hinsichtlich eines der genannten Nachteile verbessert ist.

Diese Aufgabe wird durch das in Anspruch 1 wiedergegebene Befestigungssystem gelöst.

Das Befestigungssystem weist ein Profil auf. Und es ist ein Befestigungsstück vorgesehen, sowie mindestens zwei Klemmstücke. Das Befestigungssystem umfasst zudem mindestens zwei jeweils in einer Kraftrichtung wirkende Befestigungsmittel, die mit den Klemmstücken zusammenwirken. Das Profil stellt erste Anlageflächen für die Klemmstücke bereit und das Befestigungsstück stellt zweite Anlageflächen für die Klemmstücke bereit.

Die Klemmstücke weisen an ihrer - insbesondere in ihrer Halteposition - der ersten Anlagefläche zugewandten Seite eine Schulter auf.

Die Schulter kann bevorzugt auch als Nase oder Vorsprung bezeichnet werden.

Die zweiten Anlageflächen umfassen schräge Führungsflächen für die Klemmstücke. Die Führungsflächen sind mit Vorteil derart schräg, dass sie nicht parallel und vorzugsweise auch nicht senkrecht zur Kraftrichtung der Befestigungsmittel verlaufen. Bevorzugt nimmt der Abstand der Führungsflächen - im montierten Zustand des Systems - mit zunehmender Tiefe in das Profil hinein jeweils zu dem Befestigungsmittel zu, das mit dem Klemmstück zusammenwirkt, für das die Führungsflächen eine Anlagefläche bereitstellen. Die Führungsflächen können plan oder gekrümmt sein. Wenn sie gekrümmt sind, sind sie bevorzugt konvex. Zusätzlich oder alternativ zu den zweiten Anlageflächen mit schrägen Führungsflächen sind die Klemmstücke jeweils an ihrer der zweiten Anlagefläche zugewandten Seite keilförmig ausgebildet. Vorzugsweise weisen die Klemmstücke also jeweils an ihrer der zweiten Anlagefläche zugewandten Seite eine schräge Gegenführungsfläche auf. Die Gegenführungsfläche ist mit Vorteil derart schräg, dass sie nicht parallel und vorzugsweise auch nicht senkrecht zur Kraftrichtung der Befestigungsmittel verläuft. Hierdurch kann eine Verlagerbarkeit der Klemmstücke von einer Montageposition in eine Halteposition verbessert sein.

Erfindungsgemäß weisen die Klemmstücke an einer Seite - an der der zweiten Anlagefläche zugewandten Seite - Zähne auf, die an dieser Seite der Klemmstücke mit Vorteil eine Keilform der Klemmstücke bewirken oder aufrechterhalten. Bei diesen Zähnen kann es sich um Keilzähne handeln.

Die Klemmstücke weisen an der gegenüberliegenden Seite eine Schulter auf, mit der bevorzugt Bereiche der ersten Anlagefläche hintergriffen sind, die weiter bevorzugt senkrecht zur Kraftrichtung der Befestigungsmittel verlaufen. Hierdurch kann unter anderem der folgende Vorteil erzielt werden: Mithilfe der die Keilform bewirkenden oder aufrechterhaltenden Zähne kann eine zuverlässige Verlagerung der Klemmstücke von der Montageposition in die Halteposition und Sicherung in der Halteposition erfolgen, ohne dass in Kraftrichtung der Befestigungsmittel ein definierter Anschlag für die Klemmstücke an dem Befestigungsstück bereitgestellt wird. Denn die eine Keilform bewirkenden oder aufrechterhaltenden Zähne können sich je nach Fertigungstoleranzen geringfügig weiter oder weniger weit in das Befestigungsstück eindrücken. Hierdurch kann gewährleistet sein, dass die durch die Befestigungsmittel auf die Klemmstücke ausgeübte Kraft zu einem sehr großen Anteil über die Schulter auf das Profil übertragen wird und dort zu der erwünschten Klemmung führt. Es hat sich gezeigt, dass es zur Erzielung dieses Effekts hilfreich ist, wenn, wie bevorzugt, der Keilwinkel der Keilform der Klemmstücke kleiner als 45° ist. Wie oben bereits ausgeführt, können auch an der Schulter Zähne, etwa Senkrechtzähne, vorgesehen sein.

Es ist mit Vorteil ein elastisches Element vorgesehen, das bevorzugt auf die Klemmstücke wirkt.

Das System dient zur Befestigung des Befestigungsstücks an dem Profil.

Durch das elastische Element kann eine besonders einfache Montierbarkeit des Befestigungssystems gegeben sein.

Das Befestigungsstück kann ein Bandteil sein.

Mit Vorteil umfasst das Befestigungssystem genau ein elastisches Element. Bevorzugt wirkt das elastische Element auf beide Klemmstücke.

Die Befestigungsmittel umfassen mit Vorteil jeweils eine Befestigungsschraube oder sind durch eine Befestigungsschraube gebildet. Denkbar ist auch, dass die Befestigungsmittel einen Niet, etwa Blindniet, umfassen oder jeweils hierdurch gebildet sind. Genau ein Befestigungsmittel wirkt bevorzugt jeweils mit genau einem Klemmstück zusammen. Jedes Klemmstück weist zu diesem Zweck bevorzugt eine Gewindebohrung auf.

Die Wirkung des elastischen Elements auf die Klemmstücke kann durch ein weiteres Element oder weitere Elemente vermittelt sein, etwa das oder die Befestigungsmittel. Das elastische Element kann also auf das oder die Befestigungsmittel wirken, das beziehungsweise die diese Wirkung auf die Klemmstücke übertragen können.

Das Profil umfasst bevorzugt Aluminium.

Die Klemmstücke umfassen bevorzugt härteres Material, als das Profil. Die Klemmstücke umfassen in einer Ausführungsform Stahl.

Bevorzugt durchgreifen die Befestigungsmittel das Befestigungsstück.

Bevorzugt ist das Befestigungsstück, bezogen auf die Nut des Profils, weiter außen angeordnet, als die Klemmstücke.

Wenn das elastische Element zwischen den Klemmstücken wirkt, dann kann auf besonders einfache und wirkungsvolle Weise eine vorteilhafte Montierbarkeit des Systems erreicht sein. Mit Vorteil zieht das elastische Element die Klemmstücke elastisch zusammen.

Mit dem Begriff "Kraftrichtung der Befestigungsmittel" ist im Rahmen dieser Druckschrift insbesondere die Richtung der durch diese Befestigungsmittel bewirkten Hauptkraft gemeint, bevorzugt im vollständig montierten Zustand des Systems. Im Falle von Befestigungsschrauben ist hiermit insbesondere die Richtung von deren Achse gemeint, die auf das Befestigungsstück zu gerichtet ist, bevorzugt im vollständig montierten Zustand des Systems. Die Kraftrichtung verläuft im montierten Zustand des Systems bevorzugt senkrecht zu der gedachten Ebene, in der die Öffnung der Nut des Profils liegt.

Zudem kann hierdurch mit Vorteil eine Voraussetzung für das Bewirken von Klemmkräften und/oder Spreizkräften durch die Klemmstücke geschaffen sein. Die schräge Gegenführungsfläche kann Zähne, etwa Keilzähne, umfassen oder hierdurch gebildet sein.

Wenn das elastische Element derart ausgebildet ist, dass es die Positionierung der Klemmstücke zueinander in eine Montageposition bewirkt, dann kann das System besonders einfach montierbar sein. Denn das elastische Element kann in dieser Ausführungsform den Monteur von der Aufgabe entlasten, die Klemmstücke, etwa während des Zusammenfügens des Befestigungsstücks mit dem Profil, in einer Montageposition zu halten.

Wenn das elastische Element die Verlagerung der Klemmstücke in eine Halteposition zulässt, dann ist erneut eine Voraussetzung für eine besonders einfache Montierbarkeit des Systems geschaffen. Denn der Monteur muss in diesem Falle nicht etwa, beispielsweise nach erfolgtem Zusammenfügen des Befestigungsstücks mit dem Profil, das elastische Element entfernen. Das elastische Element lässt die Verlagerung der Klemmstücke bevorzugt während des Befestigens der Befestigungsmittel in eine Halteposition zu.

Mit dem Begriff "Montageposition der Klemmstücke" ist im Rahmen dieser Druckschrift insbesondere die Position der Klemmstücke - bevorzugt zueinander - im noch nicht montierten Zustand bezeichnet, die das Zusammenfügen des Befestigungsstücks mit dem Profil ermöglicht und/oder erleichtert.

Mit dem Begriff "Halteposition der Klemmstücke" ist im Rahmen dieser Druckschrift insbesondere die Position der Klemmstücke gemeint, die diese im vollständig montierten Zustand des Befestigungssystems einnehmen.

Das Profil weist mit Vorteil eine Nut auf. Mit Vorteil sind in dieser Nut im montierten Zustand des Systems die zwei Klemmstücke nebeneinander angeordnet. Diese zwei Klemmstücke sind im montierten Zustand bevorzugt also nicht in Längsrichtung des Profils nebeneinander angeordnet, sondern senkrecht hierzu.

Der Abstand der zwei Klemmstücke in Montageposition zueinander ist bevorzugt kleiner, als die Breite der Öffnung der Nut, so dass diese Klemmstücke mit Vorteil ohne weiteres in Montagerichtung des Zusammenfügens von Klemmstück und Profil in die Nut einführbar sind.

Der Abstand von zumindest Bereichen von zwei nebeneinander in der Nut angeordneten Klemmstücken in deren Halteposition ist mit Vorteil größer, als die Breite der Öffnung der Nut. Auf diese Weise ist bevorzugt eine Wechselwirkung zwischen den in ihrer Halteposition befindlichen Klemmstücken und der Nut, etwa ein Hintergriff, möglich.

Mit Vorteil sind die zweiten Anlageflächen so ausgebildet, dass mit ihrer Hilfe die Verlagerung der Klemmstücke von einer Montageposition in eine Halteposition durch Befestigen der Befestigungsmittel bewirkbar ist. Mit Vorteil ist diese Verlagerung ausschließlich durch Befestigen der Befestigungsmittel bewirkbar. Mit Vorteil ändert sich bei dieser Verlagerung der Abstand der Klemmstücke zueinander, vorzugsweise vergrößert er sich. Mit Vorteil findet bei dieser Verlagerung eine Verkippung der Klemmstücke statt, bevorzugt derart, dass sich der Abstand der weiter von dem Befestigungsstück entfernten Bereiche der Klemmstücke stärker vergrößert, als der Abstand der näher an dem Befestigungsstück angeordneten Bereiche der Klemmstücke. Mit dem Begriff "Befestigen der Befestigungsmittel" ist beispielsweise bei einer Schraube als Befestigungsmittel deren Festschrauben gemeint, bevorzugt bis diese die gewünschte Hauptkraft (hier Zugkraft) bewirkt. Indem die Verlagerung bevorzugt durch Befestigen der Befestigungsmittel bewirkbar ist, vorzugsweise also keine weitere Handlung hierfür nötig ist, ist eine Vereinfachung der Montage erreicht.

Erfindungsgemäß weisen die Klemmstücke Zähne auf. Die Längserstreckung der Zähne verläuft mit Vorteil parallel zur Kraftrichtung der Befestigungsmittel. Die Zähne weisen bevorzugt eine keilförmige Außenkontur auf, bevorzugt derart, dass sie in weiter von dem Befestigungsstück entfernten Bereichen weiter von den Klemmstücken hervorspringen, als in näher an dem Befestigungsstück angeordneten Bereichen.

Die Keilform der Klemmstücke kann ganz oder teilweise durch die Zähne bewirkt sein. In einer Ausführungsform sind also nicht die Klemmstücke als solche jeweils bereits keilförmig sondern diese Form erlangen sie erst durch die Zähne.

Durch die Zähne ist mit Vorteil ein Formschluss bewirkbar. Der Formschluss wirkt zwischen den Klemmstücken und dem Befestigungsstück und weiter bevorzugt zwischen den Klemmstücken und dem Profil. Der Formschluss wirkt also bevorzugt zwischen dem Befestigungsstück und dem Profil, vorzugsweise vermittelt durch ein Klemmstück.

Die Zähne greifen im montierten Zustand in die zweite Anlagefläche. In einer Ausführungsform greifen die Zähne im montierten Zustand auch in die erste Anlagefläche. Mit Vorteil sind durch Befestigen der Befestigungsmittel mittels der Zähne Furchen in den ersten Anlageflächen und/oder den zweiten Anlageflächen bewirkbar, mit denen sich die Zähne mit Vorteil formschlüssig verzahnen.

Der Keilwinkel der Keilform der Klemmstücke ist in einer Ausführungsform kleiner als 45°.

In einer Ausführungsform weisen die Klemmstücke an verschiedenen - bevorzugt gegenüberliegenden - Seiten Zähne auf.

In einer Ausführungsform weisen die Klemmstücke unterschiedliche Zähne auf. Bevorzugt weisen die Klemmstücke auf verschiedenen Seiten unterschiedliche Zähne auf. Hierdurch kann den auf verschiedenen Seiten der Klemmstücke mit Vorteil vorherrschenden unterschiedlichen Anforderungen an die Zähne Rechnung getragen werden.

Bevorzugt sind auf einer Seite der Klemmstücke - der im montierten Zustand der zweiten Anlagefläche zugewandten Seite - erste Zähne vorgesehen, deren Längserstreckung mit Vorteil parallel zur Kraftrichtung der Befestigungsmittel verläuft und die weiter bevorzugt eine keilförmige Außenkontur aufweisen, bevorzugt derart, dass sie in weiter von dem Befestigungsstück entfernten Bereichen weiter von den Klemmstücken hervorspringen, als in näher an dem Befestigungsstück angeordneten Bereichen. Mit Vorteil bewirken diese ersten Zähne die auf dieser Seite der Klemmstücke bevorzugt realisierte Keilform der Klemmstücke oder halten sie aufrecht. Weiter bevorzugt bewirken diese ersten Zähne Spreizkräfte bzw. es erfolgt mit ihrer Hilfe die Verlagerung der Klemmstücke von der Montageposition in die Halteposition. Die ersten Zähne können auch als "Keilzähne" bezeichnet werden.

Auf der gegenüberliegenden Seite der Klemmstücke, an der sie eine Schulter aufweisen, weisen die Klemmstücke mit Vorteil zweite Zähne auf, die keine Keilform der Klemmstücke bewirken oder aufrechterhalten. Diese zweiten Zähne entspringen bevorzugt von der Schulter der Klemmstücke, genauer gesagt vorzugsweise aus der Fläche der Schulter, mit der diese zumindest Bereiche der ersten Anlagefläche hintergreift, die mit Vorteil senkrecht zur Kraftrichtung der Befestigungsmittel verlaufen. Diese zweiten Zähne zeigen mit Vorteil in Richtung der Kraftrichtung der Befestigungsmittel. Bei einem Befestigen der Befestigungsmittel werden diese zweiten Zähne mit Vorteil senkrecht auf diese erste Anlagefläche zu bewegt und graben sich weiter bevorzugt in diese ein. Hierdurch wird bevorzugt ein Formschluss und/oder Kraftschluss zwischen Klemmstück und Profil bewirkt. Die zweiten Zähne können auch als "Senkrechtzähne" bezeichnet werden.

In einer Ausführungsform sind an den Klemmstücken Halterungen für das elastische Element vorgesehen. Bei dem elastischen Element kann es sich um einen Ring aus elastischem Material, beispielsweise einen Gummiring, etwa einen so genannten O-Ring, handeln. Die Halterungen können Vorsprünge umfassen, an denen das elastische Element anliegen kann. Die Vorsprünge können in Vertiefungen der Klemmstücke angeordnet sein, in einer Ausführungsform derart, dass sie nicht über die Außenkontur der Klemmstücke hervor stehen. Die Vertiefungen der Klemmstücke können einander zugewandt sein. Die Halterungen können Köpfe aufweisen, gegen ein Abrutschen des elastischen Elements.

In einer Ausführungsform sind die Klemmstücke jeweils an zwei gegenüberliegenden Seiten keilförmig ausgebildet und/oder die ersten und zweiten Anlageflächen laufen in Kraftrichtung aufeinander zu. Hierdurch kann eine Voraussetzung dafür geschaffen sein, dass die Klemmstücke - mit Vorteil in ihrer Halteposition - jeweils Spreizkräfte zwischen einer ersten Anlagefläche und einer zweiten Anlagefläche bewirken.

Die Spreizkraft kann - insbesondere in der Ausführungsform, in der die Keilform der Klemmstücke ganz oder teilweise durch die Zähne bewirkt ist - ausschließlich oder teilweise durch die Zähne bewirkt sein.

Mit Vorteil ist ein Kraftschluss bewirkbar zwischen den Klemmstücken und den ersten Anlageflächen und bevorzugt zwischen den Klemmstücken und den zweiten Anlageflächen. Bevorzugt ist also ein Kraftschluss bewirkbar, zwischen dem Befestigungsstück und dem Profil, vorzugsweise vermittelt durch ein Klemmstück. Der Kraftfluss dieses Kraftschlusses verläuft mit Vorteil nicht durch das Befestigungsmittel. Hierdurch kann eine Entlastung des Befestigungsmittels erreicht sein.

Mit Vorteil ist während des Befestigens der Befestigungsmittel eine Relativbewegung zwischen den Zähnen der Klemmstücke und den Anlageflächen bewirkbar, bevorzugt auch dann, wenn die Zähne bereits in Kontakt mit den Anlageflächen sind. Hierdurch ist mit Vorteil ein Furchen der Zähne in die Anlageflächen bewirkbar. Die Zähne weisen mit Vorteil eine spitz zulaufende Außenkontur auf, so dass sich eine besonders gute Furch-Wirkung ergibt.

In einer Ausführungsform verlaufen Bereiche der ersten Anlageflächen parallel zur Kraftrichtung der Befestigungsmittel oder die ersten Anlageflächen verlaufen vollständig parallel zur Kraftrichtung der Befestigungsmittel. Es hat sich gezeigt, dass auch bei derartigen Anlageflächen eine Fixierung der Klemmstücke in Richtung der Kraftrichtung der Befestigungsmittel bewirkbar ist.

Grundsätzlich ist denkbar, dass Bereiche der zweiten Anlageflächen parallel zur Kraftrichtung der Befestigungsmittel verlaufen oder die zweiten Anlageflächen vollständig parallel zur Kraftrichtung der Befestigungsmittel verlaufen.

In einer Ausführungsform weist das Befestigungsstück mindestens einen Vorsprung auf, der eine parallel zur Kraftrichtung der Befestigungsmittel verlaufende Anlagefläche des Profils hintergreift. Der Vorsprung erstreckt sich mit Vorteil ebenfalls parallel zur Kraftrichtung des Befestigungsmittels. Mit Vorteil hintergreift das Befestigungsstück also die diese Flächen bereitstellenden Profilbereiche. Hierdurch können Spreizkräfte des Klemmstücks abgestützt sein und/oder ein Einklemmen dieser Bereiche des Profils zwischen dem Klemmstück und dem Vorsprung des Befestigungsstücks bewirkbar sein.

Bevorzugt verlaufen zumindest Bereiche der ersten Anlagefläche senkrecht zur Kraftrichtung der Befestigungsmittel. Mit Vorteil sind diese Bereiche durch die Schulter in der Halteposition der Klemmstücke hintergriffen. Die Klemmstücke weisen auch in diesem Ausführungsbeispiel, an ihren den zweiten Anlageflächen zugewandten Seiten und optional auch an ihren den ersten Anlageflächen zugewandten Seiten, Zähne auf.

In einer Ausführungsform liegen die Klemmstücke sowohl in ihrer Montageposition, als auch in ihrer Halteposition an den zweiten Anlageflächen an.

In einer grundsätzlich denkbaren weiteren Ausführungsform liegen die Klemmstücke nur in ihrer Montageposition an den zweiten Anlageflächen an und stützen sich in ihrer Halteposition lediglich an den ersten Anlageflächen ab.

Die Erfindung soll nun anhand von zwei in den Zeichnungen gezeigten Ausführungsbeispielen näher erläutert werden. Es zeigen:
- Fig. 1: eine Querschnittsdarstellung eines ersten Ausführungsbeispiels eines nicht erfindungsgemäßen Systems in noch nicht montiertem und noch nicht zusammengefügtem Zustand des Profils und des Befestigungsstücks;
- Fig. 2: eine Darstellung wie in Fig. 1 in bereits zusammengefügtem, jedoch noch nicht befestigtem Zustand;
- Fig. 3: eine Darstellung wie in Fig. 1 in zusammengefügtem und befestigtem Zustand;
- Fig. 3a: ein Detail aus Fig. 3 in etwas größerem Maßstab;
- Fig. 4: eine Querschnittsdarstellung eines zweiten Ausführungsbeispiels eines erfindungsgemäßen Systems in noch nicht vollständig zusammengefügtem Zustand des Befestigungsstücks mit dem Profil;
- Fig. 5: eine Darstellung wie in Fig. 4, im bereits vollständig zusammengefügten Zustand des Befestigungsstücks mit dem Profil jedoch im noch nicht befestigten Zustand;
- Fig. 6: eine Darstellung wie in Fig. 4, jedoch im vollständig zusammengefügten und befestigten Zustand;
- Fig. 7 bis 9: ein Klemmstück in drei Ansichten;
- Fig. 10: eine perspektivische Darstellung eines Klemmstücks in vergrößertem Maßstab;
- Fig. 11: ein Detail des in den Figuren 4 bis 6 gezeigten Ausführungsbeispiels in perspektivischer Darstellung und größerem Maßstab;
- Fig. 12: eine Querschnittsdarstellung eines dritten Ausführungsbeispiels eines erfindungsgemäßen Systems in noch nicht montiertem und noch nicht zusammengefügtem Zustand des Profils und des Befestigungsstücks;
- Fig. 13: eine Darstellung wie in Fig. 12 in bereits zusammengefügtem, jedoch noch nicht befestigtem Zustand;
- Fig. 14: eine Darstellung wie in Fig. 12 in zusammengefügtem und befestigtem Zustand;
- Fig. 15: ein Detail aus Fig. 14 in etwas größerem Maßstab;
- Fig. 16 bis 18: eines der beiden in Fig. 12 gezeigten Klemmstücke in drei Ansichten;
- Fig. 19: eine Seitenansicht wie in Fig. 16, jedoch von der gegenüberliegenden Seite
- Fig. 20: eine perspektivische Darstellung eines der beiden in Fig. 12 gezeigten Klemmstücke in vergrößertem Maßstab;
- Fig. 21: eine Darstellung wie in Fig. 20, jedoch mit Blick auf die andere Seite.

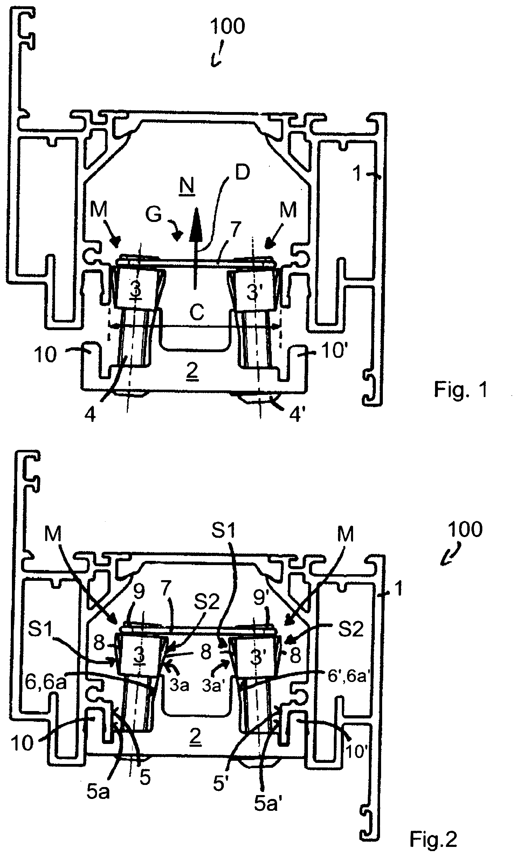

Die Figuren 1 bis 3 zeigen ein jeweils als Ganzes mit 100 bezeichnetes erstes

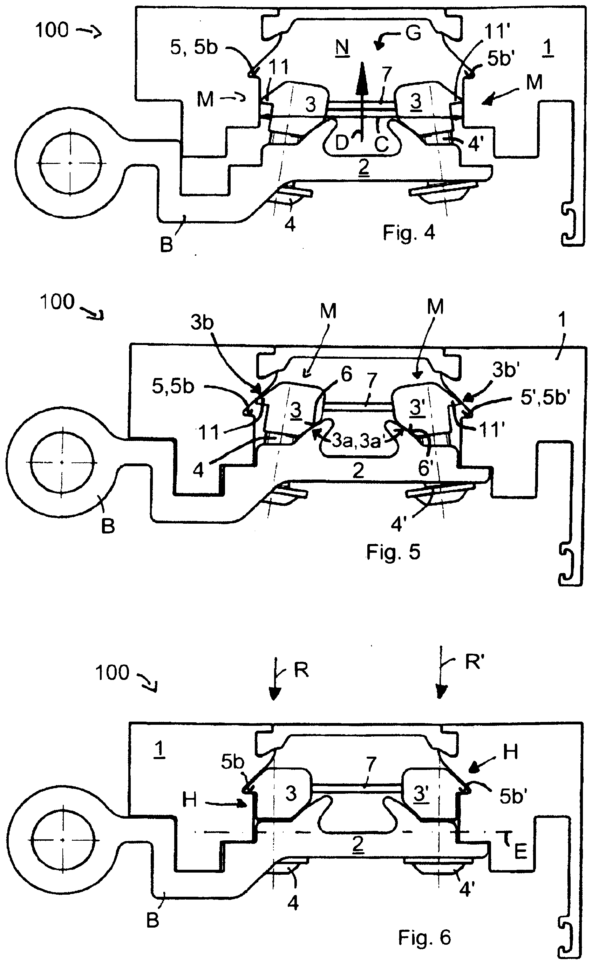

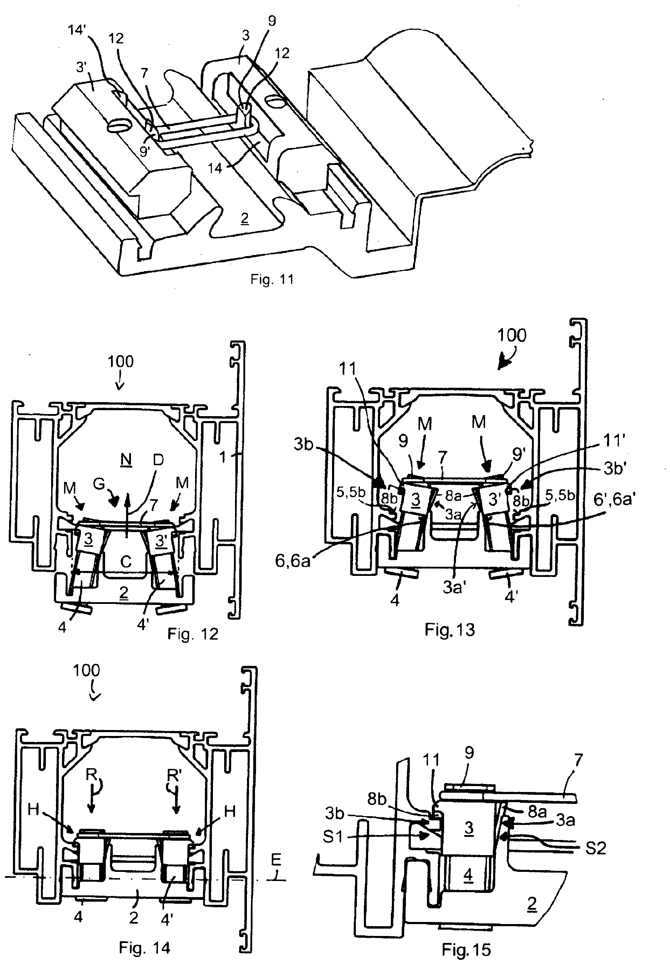

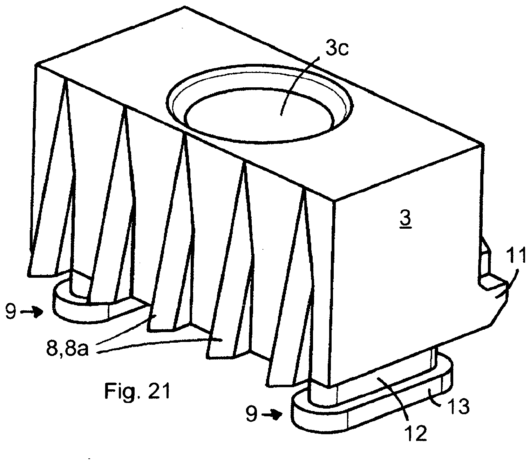

Ausführungsbeispiel eines nicht erfindungsgemäßen Systems. In den Figuren 4 bis 6 ist ein als Ganzes ebenfalls mit 100 bezeichnetes zweites Ausführungsbeispiel eines erfindungsgemäßen Systems gezeigt. In den Figuren 12 bis 21 ist ein als Ganzes ebenfalls mit 100 bezeichnetes drittes Ausführungsbeispiel eines erfindungsgemäßen Systems gezeigt.

Die Figuren 1, 4 und 12 zeigen die Montagerichtung D des Zusammenfügens von Befestigungsstück 2 und Profil 1 sowie die Breite C der Öffnung G der Nut N des Profils 1.

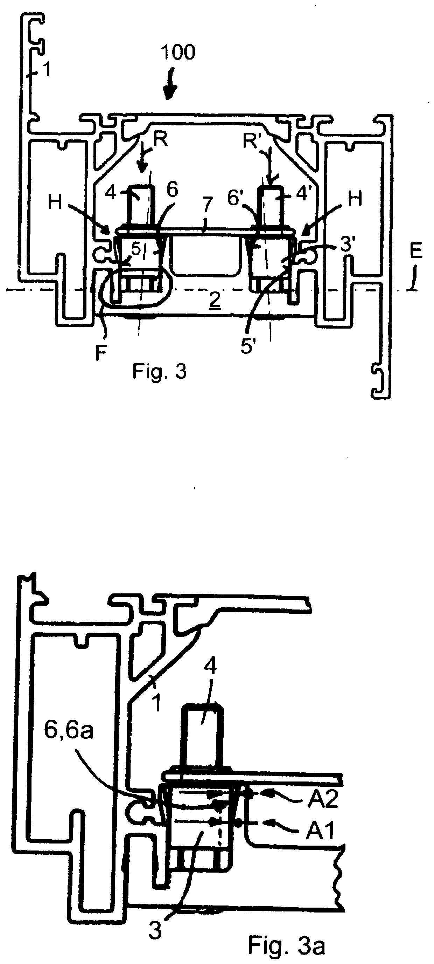

Alle gezeigten Ausführungsbeispiele des erfindungsgemäßen Systems umfassen ein Profil 1 und ein Befestigungsstück 2. Zudem umfassen alle gezeigten Ausführungsbeispiele genau zwei Klemmstücke 3, 3' und genau zwei Befestigungsmittel 4, 4', die mit den Klemmstücken 3, 3' zusammenwirken und als Befestigungsschrauben ausgeführt sind. Die Befestigungsschrauben wirken in allen gezeigten Ausführungsbeispielen mit Gewindebohrungen 3c der Klemmstücke 3, 3' zusammen. Die Kraftrichtung R, R' verläuft bei allen gezeigten Ausführungsbeispielen im montierten Zustand des Systems 100 senkrecht zu der gedachten Ebene E, in der die Öffnung G der Nut N des Profils 1 liegt. Bei allen gezeigten Ausführungsbeispielen stellt das Profil 1 erste Anlageflächen 5, 5' für die Klemmstücke 3, 3' bereit, an denen die Klemmstücke 3, 3' in ihrer Halteposition H (siehe Figuren 3, 6 und 14), anliegen. Bei allen Ausführungsbeispielen sind zudem an dem Befestigungsstück 2 zweite Anlageflächen 6, 6' für die Klemmstücke 3, 3' bereitgestellt.

Alle gezeigten Ausführungsbeispiele umfassen zudem ein elastisches Element 7, das zwischen den Klemmstücken 3, 3' wirkt und diese elastisch aufeinander zu zieht.

Die zweiten Anlageflächen 6, 6' umfassen bei allen Ausführungsbeispielen schräge Führungsflächen 6a, 6a' und die Klemmstücke 3, 3' sind jeweils an ihrer der zweiten Anlagefläche 6, 6' zugewandten Seite 3a, 3a' keilförmig ausgebildet.

In dem ersten und dritten Ausführungsbeispiel sind die schrägen Führungsflächen plan ausgeführt, in dem zweiten Ausführungsbeispiel sind sie konvex.

Das elastische Element 7 ist bei allen Ausführungsbeispielen derart ausgebildet, dass es die Positionierung der Klemmstücke 3, 3' zueinander in eine Montageposition M bewirkt und die Verlagerung der Klemmstücke in eine Halteposition H zulässt. Diese Verlagerung wird bei allen Ausführungsbeispielen dadurch bewirkt, dass, ausgehend von der Position in Figur 2 beziehungsweise Fig. 5, beziehungsweise 13 die Befestigungsmittel befestigt, also die Befestigungsschrauben angezogen werden (vergleiche Figuren 2 und 3 beziehungsweise 5 und 6, beziehungsweise 13 und 14).

Die zweiten Anlageflächen 6, 6' sind so ausgebildet, dass mit ihrer Hilfe die Verlagerung der Klemmstücke 3, 3' von der Montageposition M in die Halteposition H durch Befestigen der Befestigungsmittel bewirkbar ist. Wie ein Vergleich der Figu- ren 2 und 3 bzw. der Figuren 5 und 6 bzw. der Figuren 13 und 14 zeigt, vergrößert sich bei dieser Verlagerung der Abstand der Klemmstücke 3, 3' und es findet eine Verkippung der Klemmstücke 3, 3' statt.

Denn bei dem Anziehen der Befestigungsschrauben gleiten die Klemmstücke 3, 3' an den zweiten Anlageflächen 6, 6' entlang, was eine Vergrößerung des Abstandes der beiden Klemmstücke zueinander und eine Verkippung der Klemmstücke 3, 3' bewirkt.

Wie dies in dem ersten und dritten Ausführungsbeispiel gezeigt ist, weisen die Klemmstücke 3, 3' aller gezeigten Ausführungsbeispiele Zähne 8 auf. Die Zähne des in Figur 4 bis 6 gezeigten Ausführungsbeispiels (in den Figuren nicht gezeigt) können gleich oder entsprechend ausgeführt sein, wie die Zähne des in Fig. 1 bis 3a und Fig. 7 bis 10 gezeigten Ausführungsbeispiels.

Die Klemmstücke 3, 3' aller gezeigten Ausführungsbeispiele können Halterungen 9, 9' für das elastische Element 7 aufweisen.

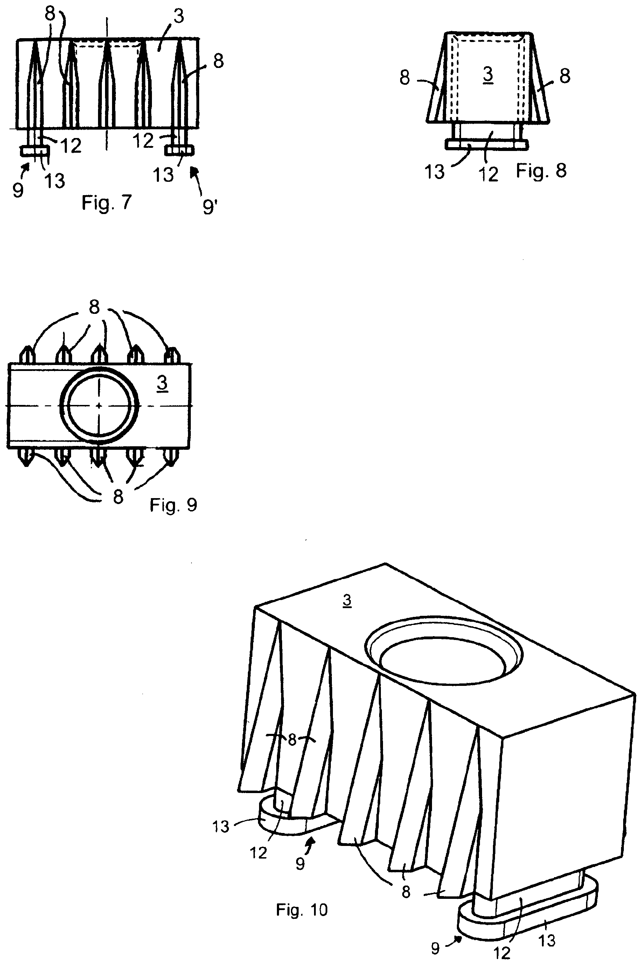

In dem in den Figuren 1 bis 3 gezeigten Ausführungsbeispiel sind die Klemmstücke 3, 3' nicht nur an ihrer den zweiten Anlageflächen 6, 6' zugewandten Seite 3a, sondern auf zwei gegenüberliegenden Seiten S1, S2 keilförmig ausgebildet. Wie aus den Figuren erkennbar, wird diese Keilform ausschließlich durch die Zähne 8 hervorgerufen. Etwa die Figuren 7 bis 10 zeigen, dass das übrige Klemmstück 3 nicht keilförmig, sondern quaderförmig ausgebildet ist. Bei dem in den Figuren 1 bis 3 gezeigten Ausführungsbeispiel verlaufen zumindest Bereiche der ersten Anlageflächen 5, 5' parallel zur Kraftrichtung R, R' der Befestigungsmittel 4, 4', also parallel zur Achse der Befestigungsschrauben in deren Halteposition H. Genauer gesagt verlaufen die ersten Anlageflächen 5, 5' hier vollständig parallel zur Kraftrichtung R, R' der Befestigungsmittel 4, 4'. Die Klemmstücke 3, 3' bewirken in diesem Ausführungsbeispiel in ihrer Halteposition H Spreizkräfte zwischen dem Befestigungsstück 2 und dem Profil 1. Figur 3 zeigt, dass der Kraftfluss F dieser Spreizkräfte nicht durch das Befestigungsmittel 4 verläuft, das Befestigungsmittel 4 also hiervon entlastet ist und die Spreizkräfte direkt zwischen Befestigungsstück 2 und Profil 1, vermittelt durch ein Klemmstück 3, wirken. In diesem Ausführungsbeispiel liegen die Klemmstücke 3, 3' in ihrer Halteposition H an den ersten Anlageflächen 5, 5' und den zweiten Anlageflächen 6, 6' an.

Die Figuren 1 bis 3 zeigen auch, dass das in diesem Ausführungsbeispiel gezeigte Befestigungsstück 2 zwei Vorsprünge 10, 10' aufweist, die jeweils eine parallel zur Kraftrichtung R der Befestigungsmittel 4, 4' verlaufende Anlagefläche 5a, 5a' des Profils hintergreifen. Das Befestigungsstück 2 ist in diesem Ausführungsbeispiel als Beschlagteil, das nicht zur Befestigung eines Bandes dient, ausgebildet.

Figur 3a verdeutlicht, dass der Abstand der als schräge Führungsflächen 6a, 6a' ausgebildeten zweiten Anlageflächen 6, 6' zu dem Befestigungsmittel 4, das mit dem Klemmstück 3 zusammenwirkt, für das sie eine Anlagefläche bereitstellen - im montierten Zustand des Systems - von einem ersten Abstand A1 mit zunehmender Tiefe in das Profil hinein jeweils zu einem zweiten Abstand A2 zunimmt.

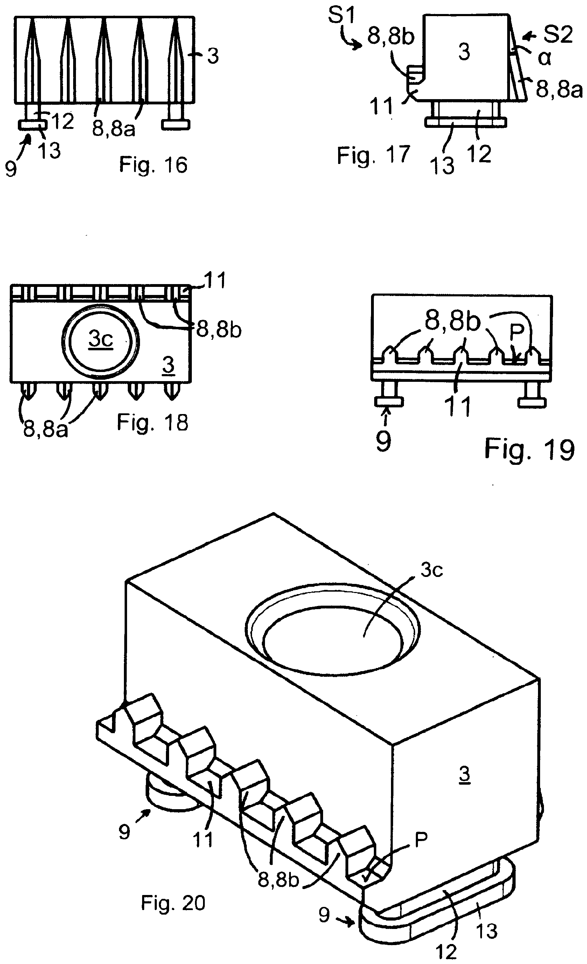

In den Figuren 7 bis 10 ist eines der beiden Klemmstücke 3, 3' des in den Figuren 1 bis 3 gezeigten Ausführungsbeispiels näher gezeigt. Unter anderem sind die Halterungen 9, 9' für das elastische Element 7 erkennbar, die aus einem Vorsprung 12 und einem Kopf 13 dieses Vorsprungs gebildet sind. Wie etwa die Figuren 16, 20 und 21 erkennen lassen, weisen auch die Klemmstücke 3, 3' des dritten Ausführungsbeispiels derartige Halterungen 9, 9' mit Vorsprung 12 und Kopf 13 auf.

Bei den in den Figuren 4 bis 5 und 12 bis 21 gezeigten Ausführungsbeispielen sind die Klemmstücke 3, 3' lediglich auf ihrer den zweiten Anlageflächen 6, 6' zugewandten Seite 3a, 3a' keilförmig ausgebildet. Auf der gegenüberliegenden Seite, also der den ersten Anlageflächen 5, 5' zugewandten Seiten 3b, 3b', weisen sie eine Schulter 11 auf.

Die ersten Anlageflächen 5, 5' sind in diesen Ausführungsbeispielen so ausgebildet, dass zumindest Bereiche 5b, 5b' senkrecht zur Kraftrichtung R der Befestigungsmittel 4, 4' verlaufen. Wie Figur 6 und 14 zeigt, hintergreifen die Schultern 11 in der Halteposition H der Klemmstücke 3, 3' diese senkrecht zur Kraftrichtung R, R' verlaufenden Bereiche 5b, 5b' der ersten Anlageflächen 5, 5'. Das Befestigungsstück 2 ist in dem zweiten Ausführungsbeispiel als Teil eines Bandes B ausgebildet. Die Klemmstücke 3, 3' können auch in diesem Ausführungsbeispiel an ihren den zweiten Anlageflächen 6, 6' zugewandten Seiten 3a, 3a' Zähne 8 aufweisen (in den Figuren nicht gezeigt).

Bei einer in den Figuren nicht gezeigten Abwandlung aller gezeigten Ausführungsbeispiele ist das elastische Element 7 jeweils weggelassen.

Figur 11 zeigt ein Detail des in den Figuren 4 bis 6 gezeigten Ausführungsbeispiels in perspektivischer Darstellung und größerem Maßstab. Es ist erkennbar, dass die Klemmstücke 3, 3' Halterungen 9, 9' für das elastische Element 7 aufweisen, mit Vorsprüngen 12 die in Vertiefungen 14, 14' der Klemmstücke 3, 3' angeordnet sind, derart, dass sie nicht über die Außenkontur der Klemmstücke hervor stehen. Die Vertiefungen 14, 14' der Klemmstücke 3, 3' sind einander zugewandt.

Der Keilwinkel α der Keilform der Klemmstücke 3, 3' ist in dem ersten und dritten gezeigten Ausführungsbeispiel kleiner als 45° (siehe etwa Fig. 17).

In dem dritten Ausführungsbeispiel weisen die Klemmstücke 3, 3' an der zweiten Anlagefläche zugewandten Seite 3a, 3a' Keilzähne 8a auf, die an dieser Seite der Klemmstücke eine Keilform der Klemmstücke bewirken (siehe etwa Fig. 16 bis 19). An der gegenüberliegenden Seite weisen die Klemmstücke 3, 3' eine Schulter 11 auf, mit der Bereiche 5b, 5b' der ersten Anlagefläche 5, 5' hintergriffen sind, die senkrecht zur Kraftrichtung R, R' der Befestigungsmittel 4, 4' verlaufen. Hierdurch kann insbesondere erreicht werden, dass die durch die Befestigungsmittel 4, 4' auf die Klemmstücke 3, 3' ausgeübte Kraft zu einem sehr großen Anteil über die Schulter 11 auf das Profil 1 übertragen wird und dort zu der erwünschten Klemmung führt (siehe etwa Fig. 15).

Bei dem dritten Ausführungsbeispiel weisen die Klemmstücke 3, 3' auf gegenüberliegenden Seiten S1, S2 Zähne 8 auf. Die Zähne 8 auf gegenüberliegenden Seiten S1, S2 sind voneinander unterschiedlich.

Auf einer Seite der Klemmstücke, und zwar der im montierten Zustand der zweiten Anlagefläche 6, 6' zugewandten Seite 3a, 3a', sind Keilzähne 8a vorgesehen, deren Längserstreckung parallel zur Kraftrichtung R, R' der Befestigungsmittel 4, 4' verläuft und die eine keilförmige Außenkontur aufweisen, derart, dass sie in weiter von dem Befestigungsstück 2 entfernten Bereichen weiter von den Klemmstücken 3, 3' hervorspringen, als in näher an dem Befestigungsstück 2 angeordneten Bereichen. Diese Keilzähne 8a bewirken die auf dieser Seite der Klemmstücke 3, 3' realisierte Keilform der Klemmstücke 3, 3 und sie bewirken Spreizkräfte bzw. es erfolgt mit ihrer Hilfe die Verlagerung der Klemmstücke 3, 3' von der Montageposition M in die Halteposition H.

Auf der gegenüberliegenden Seite und zwar der Seite der Klemmstücke 3, 3', an der sie eine Schulter 11 aufweisen, weisen die Klemmstücke 3, 3' mit Vorteil Senkrechtzähne 8b auf, die keine Keilform der Klemmstücke bewirken. Diese Senkrechtzähne 8b entspringen von der Schulter 11 der Klemmstücke, genauer gesagt aus der Fläche P der Schulter 11, mit der diese zumindest Bereiche der ersten Anlagefläche 5b, 5b' hintergreift, die senkrecht zur Kraftrichtung R, R' der Befestigungsmittel 4, 4' verlaufen. Diese Senkrechtzähne 8b zeigen in Richtung der Kraftrichtung R, R' der Befestigungsmittel 4, 4'. Bei einem Befestigen der Befestigungsmittel 4, 4' werden diese Senkrechtzähne 8b senkrecht auf diese erste Anlagefläche 5b, 5b' zu bewegt und graben sich in diese ein.

### Bezugszeichenliste:

- 100: Befestigungssystem
- 1: Profil
- 2: Befestigungsstück
- 3, 3': Klemmstücke
- 3a, 3a': der zweiten Anlagefläche zugewandte Seite der Klemmstücke
- 3b, 3b': der ersten Anlagefläche zugwandte Seite der Klemmstücke
- 3c: Gewindebohrung
- 4, 4': Befestigungsmittel
- 5, 5': erste Anlageflächen
- 5a, 5a': parallel zur Kraftrichtung verlaufende erste Anlageflächen
- 5b, 5b': senkrecht zur Kraftrichtung verlaufende erste Anlageflächen
- 6, 6': zweite Anlageflächen
- 6a, 6a': Führungsflächen
- 7: elastisches Element
- 8: Zähne
- 8a: Keilzähne
- 8b: Senkrechtzähne
- 9, 9': Halterungen
- 10, 10': Vorsprung des Befestigungsstücks
- 11, 11': Schulter
- 12: Vorsprung
- 13: Kopf
- 14, 14': Vertiefungen

- A1: Abstand
- A2: Abstand
- B: Bandteil
- C: Breite der Öffnung der Nut
- D: Montagerichtung
- E: gedankliche Ebene, in der die Öffnung der Nut liegt
- G: Öffnung der Nut

- F: Kraftfluss
- H: Halteposition
- M: Montageposition
- N: Nut
- P: Fläche der Schulter
- R, R': Kraftrichtung
- S1, S2: gegenüberliegende Seiten des Klemmstücks
- α: Keilwinkel

## Patentansprüche

1. Befestigungssystem (100) für ein Band, mit einem Profil (1), mit einem Befestigungsstück (2), mit mindestens zwei Klemmstücken (3, 3') und mit mindestens zwei jeweils im montierten Zustand an dem Befestigungsstück (2) anliegenden und in einer Kraftrichtung (R, R') wirkenden Befestigungsmitteln (4, 4'), die zum Verlagern der Klemmstücke (3, 3') mit den Klemmstücken (3, 3') zusammenwirken,
wobei das Profil (1) erste Anlageflächen (5, 5') für die Klemmstücke (3, 3') bereitstellt und das Befestigungsstück (2) zweite Anlageflächen (6, 6') für die Klemmstücke (3, 3') bereitstellt,
wobei die Klemmstücke (3, 3') an ihrer der ersten Anlagefläche (5, 5') zugewandten Seite (3b, 3b') eine Schulter (11, 11') aufweisen,
wobei zur Führung der Klemmstücke (3,3') gegenüber dem Befestigungsstück (2) die zweiten Anlageflächen (6, 6') in Bezug auf die Kraftrichtung (R, R') schräge Führungsflächen (6a, 6a') für die Klemmstücke (3, 3') umfassen und/oder die Klemmstücke (3, 3') jeweils an ihrer der zweiten Anlagefläche (6, 6') zugewandten Seite (3a, 3a') keilförmig ausgebildet sind,
wobei die Klemmstücke (3, 3') im montierten Zustand jeweils mit der Schulter (11, 11') an der ersten Anlagefläche (5, 5') und mit der der zweiten Anlagefläche (6, 6') zugewandten Seite (3a, 3a') an der zweiten Anlagefläche (6, 6') anliegen,
**dadurch gekennzeichnet,**
**dass** die Klemmstücke (3, 3') an der der zweiten Anlagefläche (6, 6') zugewandten Seite (3a, 3a') Zähne (8, 8a) aufweisen, die an dieser Seite der Klemmstücke (3, 3') eine Keilform der Klemmstücke (3, 3') bewirken oder aufrechterhalten und an der gegenüberliegenden Seite die Schulter (11) aufweisen.

2. Befestigungssystem nach Anspruch 1, **dadurch gekennzeichnet, dass** zumindest Bereiche (5b, 5b') der ersten Anlagefläche (5, 5') senkrecht zur Kraftrichtung (R, R') der Befestigungsmittel (4, 4') verlaufen.

3. Befestigungssystem nach Anspruch 1 oder 2, **dadurch gekennzeichnet, dass** die Klemmstücke (3, 3') jeweils an zwei gegenüberliegenden Seiten (S1, S2) keilförmig ausgebildet sind und/oder die ersten und zweiten Anlageflächen (5, 5', 6, 6') in Kraftrichtung (R, R') aufeinander zulaufen.

4. Befestigungssystem nach einem der Ansprüche 1 bis 3, **dadurch gekennzeichnet, dass** die zweiten Anlageflächen (6, 6') so ausgebildet sind, dass mit ihrer Hilfe die Verlagerung der Klemmstücke (3, 3') von einer Montageposition (M) in eine Halteposition (H) durch Befestigen der Befestigungsmittel (4, 4') bewirkbar ist.

5. Befestigungssystem nach einem der Ansprüche 1 bis 4, **dadurch gekennzeichnet, dass** das Befestigungsstück (2) mindestens einen Vorsprung (10, 10') aufweist, der eine parallel zur Kraftrichtung (R, R') der Befestigungsmittel (4, 4') verlaufende erste Anlagefläche (5a, 5a') hintergreift.

6. Befestigungssystem (100) nach einem der Ansprüche 1 bis 5, **dadurch gekennzeichnet, dass** ein elastisches Element (7) vorgesehen ist, das auf die Klemmstücke (3, 3') wirkt.

7. Befestigungssystem nach Anspruch 6, **dadurch gekennzeichnet, dass** das elastische Element (7) zwischen den Klemmstücken (3, 3') wirkt.

8. Befestigungssystem nach Anspruch 6 oder 7, **dadurch gekennzeichnet, dass** das elastische Element (7) derart ausgebildet ist, dass es die Positionierung der Klemmstücke (3, 3') zueinander in eine Montageposition (M) bewirkt und die Verlagerung der Klemmstücke (3, 3') in eine Halteposition (H) zulässt und dass an den Klemmstücken (3, 3') Halterungen (9, 9') für das elastische Element (7) vorgesehen sind.

## Claims

1. Fastening system (100) for a hinge, comprising a profile (1), a fastening piece (2), at least two clamping pieces (3, 3'), and at least two fastening means (4, 4') which each bear against the fastening piece (2) in the assembled state and act in a force direction (R, R') and interact with the clamping pieces (3, 3) in order to displace the clamping pieces (3, 3), wherein the profile (1) provides first contact surfaces (5, 5') for the clamping pieces (3, 3') and the fastening piece (2) provides second contact surfaces (6, 6') for the clamping pieces (3, 3'),
wherein the clamping pieces (3, 3') have a shoulder (11, 11') on the side (3b, 3b') thereof that faces the first contact surface (5, 5'),
wherein, in order to guide the clamping pieces (3, 3') relative to the fastening piece (2), the second contact surfaces (6, 6') comprise guide surfaces (6a, 6a') for the clamping pieces (3, 3') that are oblique with respect to the force direction (R, R'), and/or the clamping pieces (3, 3') are each wedge-shaped on the side (3a, 3a') thereof that faces the second contact surface (6, 6'),
wherein, in the assembled state, the clamping pieces (3, 3') each bear against the first contact surface (5, 5') with the shoulder (11, 11') and bear against the second contact surface (6, 6') with the side (3a, 3a) facing the second contact surface (6, 6'),
**characterized in that,**
the clamping pieces (3, 3') have teeth (8, 8a) on the side (3a, 3a') facing the second contact surface (6, 6'), which teeth produce or maintain a wedge shape of the clamping pieces (3, 3') on this side of the clamping pieces (3, 3'), and have the shoulder (11) on the opposite side.

2. Fastening system according to claim 1, **characterized in that** at least regions (5b, 5b') of the first contact surface (5, 5') extend perpendicularly to the force direction (R, R') of the fastening means (4, 4').

3. Fastening system according to either claim 1 or claim 2, **characterized in that** the clamping pieces (3, 3') are each wedge-shaped on two opposite sides (S1, S2) and/or the first and second contact surfaces (5, 5', 6, 6') converge in the force direction (R, R').

4. Fastening system according to any of claims 1 to 3, **characterized in that** the second contact surfaces (6, 6') are designed such that, by means of said contact surfaces, the displacement of the clamping pieces (3, 3') from an assembly position (M) into a holding position (H) can be brought about by fastening the fastening means (4, 4').

5. Fastening system according to any of claims 1 to 4, **characterized in that** the fastening piece (2) has at least one projection (10, 10') which engages behind a first contact surface (5a, 5a') extending in parallel with the force direction (R, R') of the fastening means (4, 4').

6. Fastening system (100) according to any of claims 1 to 5, **characterized in that** a resilient element (7) is provided which acts on the clamping pieces (3, 3').

7. Fastening system according to claim 6, **characterized in that** the resilient element (7) acts between the clamping pieces (3, 3').

8. Fastening system according to either claim 6 or claim 7, **characterized in that** the resilient element (7) is designed such that it brings about the positioning of the clamping pieces (3, 3') relative to one another in an assembly position (M) and allows the displacement of the clamping pieces (3, 3') into a holding position (H), and **in that** holders (9, 9') for the resilient element (7) are provided on the clamping pieces (3, 3').

## Revendications

1. Système de fixation (100) pour une bande, comportant un profilé (1), comportant une pièce de fixation (2), comportant au moins deux pièces de serrage (3, 3') et comportant au moins deux moyens de fixation (4, 4') agissant dans un sens de force (R, R') et reposant sur la pièce de fixation (2), respectivement à l'état assemblé, lesquels, pour déplacer les pièces de serrage (3, 3'), coopèrent avec les pièces de serrage (3, 3'),
dans lequel le profilé (1) fournit des premières surfaces d'appui (5, 5') pour les pièces de serrage (3, 3') et la pièce de fixation (2) fournit des secondes surfaces d'appui (6, 6') pour les pièces de serrage (3, 3'),
dans lequel les pièces de serrage (3, 3') comportent, sur leur côté (3b, 3b') tourné vers les premières surfaces d'appui (5, 5'), un épaulement (11, 11'),
dans lequel, pour guider les pièces de serrage (3, 3') par rapport à la pièce de fixation (2), les secondes surfaces d'appui (6, 6') comprennent des surfaces de guidage (6a, 6a') pour les pièces de serrage (3, 3') inclinées par rapport au sens de force (R, R') et/ou les pièces de serrage (3, 3') sont conçues sous la forme de coin respectivement sur leur côté (3a, 3a') tourné vers les secondes surfaces d'appui (6, 6'),
dans lequel les pièces de serrage (3, 3'), à l'état assemblé, reposent respectivement avec l'épaulement (11, 11') sur les premières surfaces d'appui (5, 5') et avec le côté (3a, 3a') tourné vers les secondes surfaces d'appui (6, 6') sur les secondes surfaces d'appui (6, 6'),
**caractérisé en ce**
**que** les pièces de serrage (3, 3') comportent, sur le côté (3a, 3a') tourné vers les secondes surfaces d'appui (6, 6'), des dents (8, 8a), lesquelles, sur ledit côté des pièces de serrage (3, 3'), provoquent ou maintiennent une forme de coin des pièces de serrage (3, 3') et comportent, sur le côté opposé, l'épaulement (11).

2. Système de fixation selon la revendication 1, **caractérisé en ce qu'**au moins des zones (5b, 5b') des premières surfaces d'appui (5, 5') s'étendent perpendiculairement au sens de force (R, R') des moyens de fixation (4, 4').

3. Système de fixation selon la revendication 1 ou 2, **caractérisé en ce que** les pièces de serrage (3, 3') sont respectivement conçues sous la forme de coin sur deux côtés (S1, S2) opposés et/ou les premières et secondes surfaces d'appui (5, 5', 6, 6') convergent dans le sens de force (R, R').

4. Système de fixation selon l'une quelconque des revendications 1 à 3, **caractérisé en ce que** les secondes surfaces d'appui (6, 6') sont conçues de telle sorte qu'avec leur aide, le déplacement des pièces de serrage (3, 3') d'une position d'assemblage (M) vers une position de maintien (H) peut être provoqué par la fixation des moyens de fixation (4, 4').

5. Système de fixation selon l'une quelconque des revendications 1 à 4, **caractérisé en ce que** la pièce de fixation (2) comporte au moins une saillie (10, 10') venant en prise à l'arrière d'une première surface d'appui (5a, 5a'), laquelle s'étend parallèlement au sens de force (R, R') des moyens de fixation (4, 4').

6. Système de fixation (100) selon l'une quelconque des revendications 1 à 5, **caractérisé en ce qu'**un élément élastique (7) est fourni, lequel agit sur les pièces de serrage (3, 3').

7. Système de fixation selon la revendication 6, **caractérisé en ce que** l'élément élastique (7) agit entre les pièces de serrage (3, 3').

8. Système de fixation selon la revendication 6 ou 7, **caractérisé en ce que** l'élément élastique (7) est conçu de telle sorte qu'il provoque le positionnement des pièces de serrage (3, 3') l'une par rapport à l'autre dans une position d'assemblage (M) et permet le déplacement des pièces de serrage (3, 3') dans une position de maintien (H) et que, sur les pièces de serrage (3, 3'), des maintiens (9, 9') pour l'élément élastique (7) sont situés.
